# FASCICULE DE BREVET EUROPEEN

(11) **EP 0 570 306 B1**
(45) Date de publication et mention de la délivrance du brevet: **03.01.1996**
(21) Numéro de dépôt: 93420190.6
(22) Date de dépôt: 11.05.1993
(51) Int. Cl.: A23L 1/221, C11B 9/02

(54) **Installation pour extraire, concentrer et classer des composés bio-chimiques à partir de substances biologiques végétales ou animales**
Einrichtung zum Extrahieren, Konzentrieren und Abscheiden von biochemischen produkten aus pflänzlichen oder tierischen biologischen Stoffen
Apparatus for extracting, concentrating and separating biochemical products from vegetable or animal biological substances

(30) Priorité: 11.05.1992 FR 9205669
(43) Date de publication de la demande: 18.11.1993
(73) Titulaire: Cogat, Pierre-Olivier, F-92260 Fontenay aux Roses (FR)
(72) Inventeur: Cogat, Pierre-Olivier, F-92260 Fontenay aux Roses (FR)
(74) Mandataire: Laurent, Michel

(56) Documents cités:
- FR-A- 473 316
- FR-A- 2 483 454
- FR-A- 2 569 537
- FR-A- 2 638 333
- US-A- 3 034 900

## Description

L'invention concerne une installation pour extraire, concentrer et classer des composés bio-chimiques volatils et/ou extractibles à partir de substances biologiques végétales ou animales, notamment de plantes, de fruits ou de condiments.

L'invention vise plus particulièrement une installation unique permettant à la fois d'extraire distinctement des composés aromatiques volatils ou entraînables, des composés hydrosolubles ou non, ainsi que des composés sapides et autres, solubles dans un mélange hydroalcoolique défini.

Dans le document FR-A-2 638 333, le Demandeur a décrit un matériel permettant d'extraire des jus et des arômes à partir de substrats végétaux. Cette installation comprend essentiellement :
- une chambre de chauffage, destinée à recevoir les substances à traiter, reliée en partie basse à une arrivée de vapeur et en partie haute à un circuit d'évaporation ;
- un circuit d'évaporation connecté à la partie haute de la chambre de chauffage, puis par une vanne au bas d'une colonne à distiller, reliée à son tour par le haut à un condenseur, relié à une source de vide ;
- un circuit de coulage du liquide récupéré dans le condenseur, connecté à un bac de récupération, relié à son tour par une vanne, soit à la chambre de chauffage, soit à un orifice de soutirage; de la sorte, on peut récupérer du condenseur des mélanges de solvants, d'huiles essentielles, d'eaux aromatiques ou d'autres composés.

En pratique, on place la matière à traiter (baies, fruits, plantes, condiments, etc . ) dans des paniers perforés ou sur une grille dans la chambre de chauffage, puis on fait un vide brutal, c'est-à-dire important et rapide, pour extraire dans le condenseur les produits les plus volatils. On récupère ainsi des eaux aromatiques dans le bac. Dans cette installation, la vapeur sert soit à réchauffer la matière avant la mise sous vide, soit à chauffer le fond de la chambre de chauffage. Cette technique est satisfaisante pour la récupération des jus, mais ne permet d'extraire que des produits volatils, notamment les plus légers, et seulement des huiles lourdes entraînables en poursuivant l'entraînement à la vapeur. En revanche, les produits sapides, c'est-à-dire ceux qui donnent le goût, ou les huiles lourdes non-entraînables, ne sont malheureusement pas extraits.

Bref, si cette installation permet d'extraire avantageusement les produits légers, c'est-à-dire ceux qui donnent la sensation de fraicheur, puis les produits lourds entraînables, en revanche, elle ne permet pas d'extraire les produits lourds non-entraînables sapides ou qui donnent la couleur, ou qui sont recherchés pour d'autres propriétés.

Lorsque l'on veut récupérer ces composés sapides colorés ou autres non entraînables qui sont de plus en plus recherchés, il faut procéder à d'autres opérations sur un matériel distinct et spécifique. Il s'ensuit que pour valoriser au maximum ces produits végétaux, il faut faire appel à une série d'opérations discontinues sur des matériels distincts, ce qui est long et coûteux.

L'invention pallie ces inconvénients. Elle vise une installation du type en question, qui permette d'extraire, de concentrer et de classer la quasi totalité des composés bio-chimiques à partir de substances biologiques végétales ou animales avec un équipement unique. Elle permet notamment de récupérer tous les composés aromatiques entraînables ou non, et également les autres composés sapides ou non, voire des produits qui donnent la couleur, sur un seul et même appareil, en opérant de manière discontinue, mais sans changer de matériel, comme on le faisait jusqu'alors.

L'invention vise plus particulièrement une installation qui permette d'effectuer l'épuisement total de la matière, ce qui limite les investissements et facilite le fonctionnement.

Cette installation pour extraire, concentrer et classer des composés bio-chimiques à partir de substances biologiques végétales ou animales, comprenant :
. une chambre de chauffage, destinée à recevoir les substances à traiter, reliée en partie basse à une arrivée de vapeur et en partie haute à un circuit d'évaporation, et présentant en partie basse un agitateur,
. un circuit d'évaporation connecté à la partie haute de la chambre de chauffage, puis par une vanne au bas d'une colonne à distiller reliée à son tour par le haut à une vanne, puis à un condenseur relié à une source de vide,
. un circuit de coulage du liquide récupéré dans le condenseur, connecté à un bac de récupération, relié à son tour par une vanne soit au bas de la chambre de chauffage, soit à un orifice de soutirage,
. ledit liquide récupéré au condenseur étant formé soit d'un solvant, soit d'eaux aromatiques chargées en composés aromatiques légers entraînables, soit d'un mélange d'eau et d'huiles essentielles entraînables,
se caractérise en ce que le circuit de coulage comprend :
- un décanteur relié par une vanne au condenseur puis à un premier bac pour récupérer les huiles essentielles, et à un second bac pour récupérer les eaux aromatiques, ledit décanteur étant connecté à son tour par le haut à la source de vide ;
- un circuit double de coulage relié :
   . le premier par un jeu de vannes à un troisième bac destiné à recevoir les composés aromatiques légers, et à un quatrième bac destiné à recevoir le solvant régénéré,
   . le second par un jeu de vannes, soit au second bac de récupération des eaux aromatiques, soit à un cinquième bac destiné à recevoir le solvant à régénérer, soit à un circuit de reflux connecté par des vannes, soit à la partie haute de la chambre de chauffage, soit à la partie haute de la colonne à distiller.

L'installation conforme à l'invention permet de traiter avec succès et sur un équipement unique, la plupart des matières biologiques végétales ou animales, telles que par exemple des baies, des fruits, des légumes, des condiments, voire des matières animales fermentées ou séchées (poissons, etc. ).

En d'autres termes, l'invention permet, grâce à un matériel unique, d'effectuer sur une même installation, toutes les extractions aussi bien à la vapeur que par des solvants. Comme par ailleurs, cette installation est reliée à une source à vide, on peut aussi mécaniquement redistribuer la matière en l'agitant ou en la secouant, ce qui la rend encore plus apte à la diffusion par les solvants, c'est-à-dire à un diffuseur plus rapide et plus poussée des solutés (substances solubles extractibles).

Avantageusement, en pratique :
- le deuxième, le troisième, le quatrième et le cinquième bacs son reliés à leur partie basse et par des vannes à un circuit destiné à diriger le liquide, soit à la partie basse de la colonne à distiller, soit à la partie basse de la chambre de chauffage, soit à l'orifice de soutirage ;
- la chambre de chauffage présente un circuit relié directement au condenseur formé de deux prises, associées à des vannes, disposées l'une juste en dessus, l'autre juste en dessous des substances à traiter ;
- la partie basse de la chambre de chauffage où est disposé l'agitateur, est reliée à un circuit de soutirage et de recyclage, destiné au moyen d'une vanne, à diriger le mélange solvant-soluté, soit vers une cuve de stockage (soutirage), soit vers une pompe de recyclage de ce liquide en partie haute de la chambre de chauffage ;
- le circuit de recyclage comporte une vanne pour diriger le liquide à un sixième bac destiné à récupérer les fractions concentrées solubles du solvant ;
- la chambre de chauffage présente en partie haute, un orifice d'amenée relié au circuit de recyclage du solvant qui débouche sur un moyen pour arroser les substances de solvant, telles que par exemple des buses ou des rampes.

La manière dont l'invention peut être réalisée et les avantages qui en découlent, ressortiront mieux de l'exemple de réalisation qui suit à l'appui des figures annexées.

La figure 1 est une représentation schématique générale de l'installation conforme à l'invention.

Les figures 2 et 3 sont une représentation plus détaillée, respectivement du circuit double de coulage (figure 2) et du circuit de soutirage et de recyclage (figure 3).

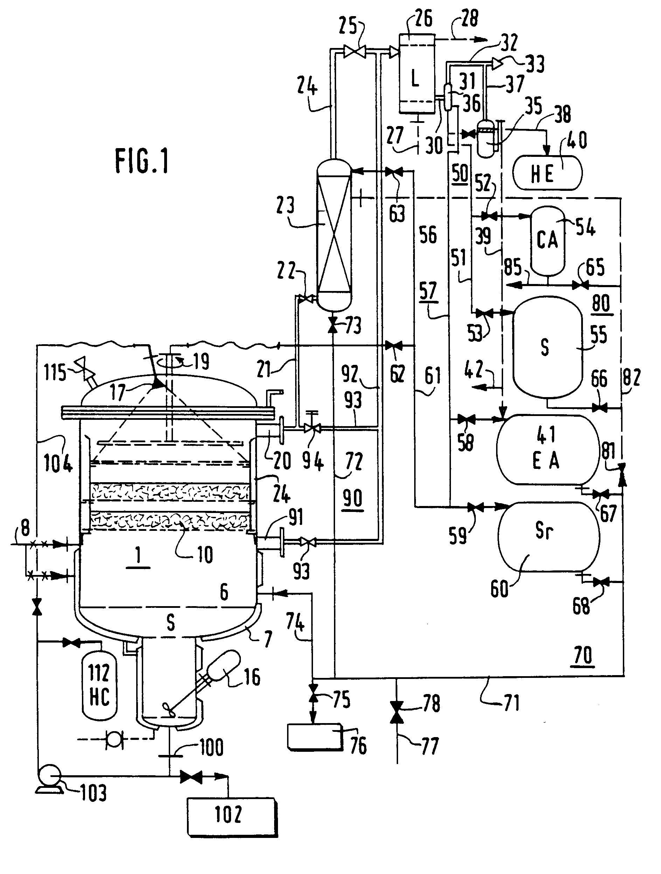

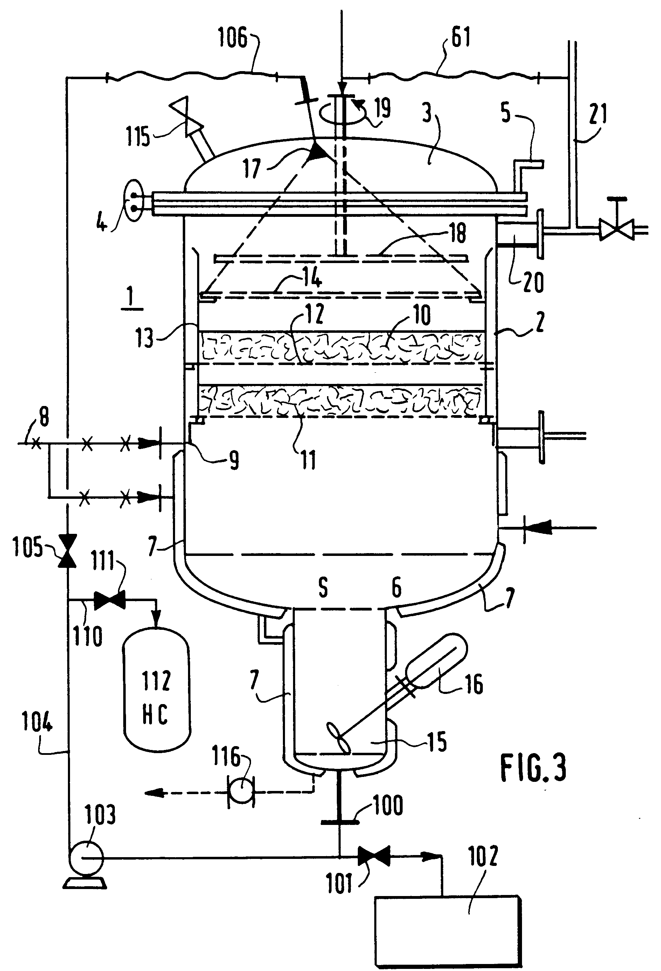

L'installation conforme à l'invention comprend essentiellement (voir figures 1 et 3), une chambre de chauffage désignée par la référence générale (1), analogue à celle décrite dans le document FR-A-2 638 333 du Demandeur cité dans le préambule. Cette chambre (1) est constituée d'une enceinte verticale (2) en acier inoxydable surmontée d'un couvercle (3), permettant par pivotement autour d'une charnière (4) et grâce à une poignée (5), d'introduire la matière à traiter désignée par la référence générale (10). Dans une variante, le couvercle (3) peut être remplacé par un "trou d'homme" associé à un orifice latéral de remplissage.

Le fond (6) de l'enceinte (2) est équipé d'une double couronne (7) de chauffage. L'enceinte (2) et la double couronne (7) sont reliées de manière connue à une source de vapeur injectée (8). Ainsi, la vapeur (8) permet par injection en (9), de réchauffer la matière (10) et/ou de chauffer la double couronne (7) du fond (6). La double enveloppe (7) sert essentiellement à chauffer le fond (6) de l'enceinte (2) lorsque l'on désire évaporer le solvant (S) contenu dans cette partie de la chambre (1).

Le fond (6) de l'enceinte de la chambre (1), se termine par un appendice (15) dans lequel est disposé de manière inclinée un agitateur (16). Cet agitateur à fortes turbulences, permet d'éviter des dégradations pouvant entraîner des effets de gratinage sur les parois de l'appendice (15).

Selon le cas, la matière à traiter (10) est placée soit sur des paniers perforés (11,12) amovibles (13), soit sur une grille. L'ensemble est surmonté d'une autre grille dite "d'antiprimage" dénommée également "grille dévésiculeur" (14). La référence (17) désigne une buse d'arrosage avec du solvant (S) et la référence (18) une grille rotative (19) de répartition, destinée à arroser la matière (10) en un mélange hydroalcoolique régénéré Sr.

Le haut de l'enceinte (2) de la chambre présente juste en dessous du couvercle (3), un orifice de départ (20) relié à une tubulure (21) connectée à une vanne (22) reliée à la partie basse d'une colonne de distillation (23). Cette colonne (23) peut être d'un type connu, par exemple à garnissage, à calottes ou à plateaux. Elle est essentiellement destinée à concentrer les eaux aromatiques (EA), à régénérer le solvant alcoolique (Sr), puis à reclasser les huiles essentielles (HE) par azéotropie. Le haut de cette colonne de distillation (23) est relié par une tubulure de liaison (24) et une vanne (25) à la partie haute d'un condenseur (26), par exemple du type dit "à surface ".

Ce condenseur (26) est essentiellement destiné à condenser les eaux aromatiques (EA) légères par effet de vide et de pression, ainsi que les huiles essentielles (HE). Les références (27) et (28) désignent respectivement les conduits d'arrivée d'eau froide (27) et de sortie de l'eau tiède (28). Le bas du condenseur (26) présente une tubulure de liaison (30) à une bouteille (31) classique qui permet de diriger le liquide L issu du condenseur (26) sur le circuit caractéristique de l'invention. Cette bouteille (31) est reliée par une tuyauterie (32) à une source de vide (33) permettant à la demande, d'obtenir un vide de 0,3 bar absolu en marche normale et 0,05 bar absolu pour la phase d'évaporation/éclair (flash).

Le liquide L récupéré dans le condenseur (26) est essentiellement constitué selon les étapes du procédé, d'un mélange de solvant (S), de soluté, d'huiles essentielles (HE), d'eaux aromatiques (EA) et de composés aromatiques légers entraînables (CA).

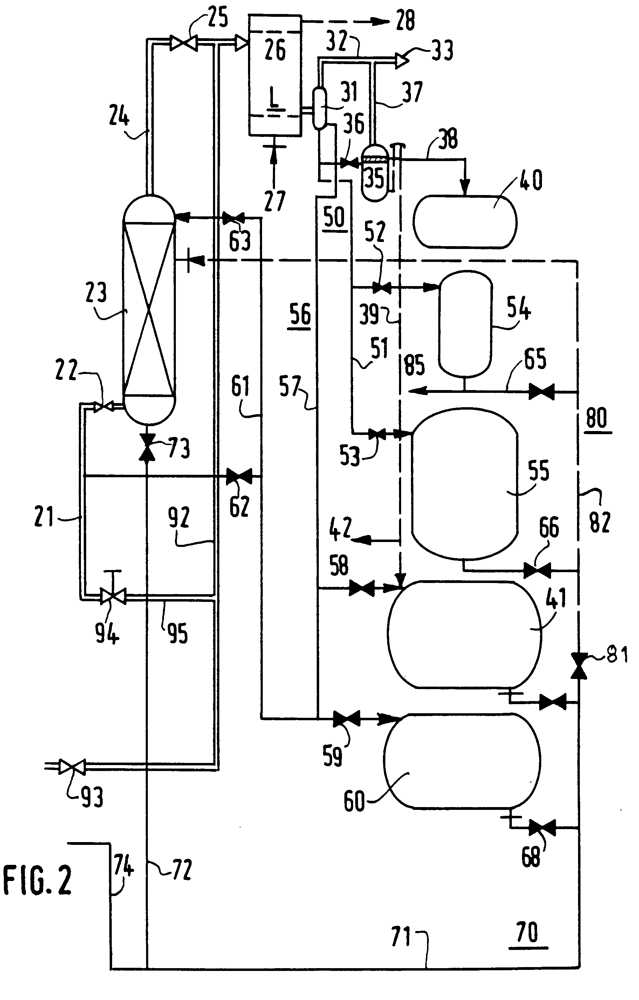

La bouteille (31) est reliée à sa base à un circuit de coulage. Selon une première caractéristique de l'invention (voir figure 2), ce circuit de coulage comprend un décanteur (35), relié par une vanne (36) au bas de la bouteille (31), et par là au condenseur (26). Ce décanteur (35) est relié par le haut à la source de vide (33) au moyen d'une tuyauterie (37) . Ce décanteur (35) classique vertical, permet de décanter les huiles essentielles entraînables à la vapeur d'eau et est relié par le haut (ou par le bas) à un premier bac (40) pour récupérer les huiles essentielles (HE) au moyen d'une tuyauterie (38). Ce décanteur (35) est également relié par une tuyauterie comportant un siphon (39) à un second bac (41) pour récupérer les eaux aromatiques (EA). Une prise (42) permet d'éliminer directement une partie des eaux aromatiques (EA) avant de les envoyer dans le bac (41).

Selon une autre caractéristique de l'invention, le circuit de coulage est formé d'un circuit double de coulage relié, depuis le bas de la bouteille (31), le premier circuit (51) par un jeu de vannes (52,53), dans l'ordre soit à un troisième bac (54) destiné à recevoir les composés aromatiques légers (CA), tels que alcools, aldéhydes, cétones, esters, soit à un quatrième bac (55) destiné à recevoir le solvant régénéré (S). Le second circuit de coulage (56) est relié par une tubulure (57) et par un jeu de vannes (58,59), respectivement au second bac (41) de récupération des eaux aromatiques (EA) ou à un cinquième bac (60) de récupération du solvant à régénérer (Sr).

Selon une caractéristique de l'invention, ce second circuit de coulage (57) est relié par une tubulure de reflux (61) et par des vannes (62,63), soit à la partie haute (19) de l'enceinte (2) de la chambre de chauffage (1), soit à la partie haute de la colonne de distillation (23).

Selon une autre caractéristique de l'invention, le deuxième (41), le troisième (54), le quatrième (55) et le cinquième bacs (60) sont reliés à leur partie basse par des vannes (65,66,67,68) à un circuit désigné par la référence (70) qui permet, par une tubulure (71), de diriger directement le liquide L récupéré du condenseur (26), soit à la partie basse de la colonne de distillation (23) grâce à la tubulure (72) et à la vanne (73), soit par une tubulure (74) à la partie basse (6) de la chambre (1) de chauffage, soit par la vanne (75) vers l'orifice de soutirage (76).

La référence (77) et la vanne (78) désignent une arrivée de solvant frais (S) sur la tubulure (71).

Un autre circuit (voir figure 2), désigné par la référence (80) permet, par une vanne (81) et une tubulure (82), de diriger les eaux aromatiques (EA), les composés aromatiques hydrosolubles non décantables (CA) ou le solvant (Sr) à régénérer, directement en tête de la colonne de distillation (23) pour le fractionner à nouveau en continu. Une prise (85) permet, si on le désire, d'extraire directement du troisième bac (54), les composés aromatiques (CA) légers commercialisables.

Selon une autre caractéristique de l'invention, l'enceinte (2) de la chambre de chauffage (1), présente un autre circuit désigné par la référence générale (90) muni d'une prise (91) disposée dans l'enceinte (2), juste en dessous de la substance à traiter (10), reliée par une tuyauterie (92) à une vanne (93), et de là directement au condenseur (26). La prise (20) disposée juste au dessus de la matière (10) à traiter, est reliée par une connexion (93) et une vanne (94) à la tuyauterie principale (92) reliée au condenseur (26). Ce circuit (92) permet en recondensant seulement en (26), de renvoyer par le circuit de reflux (61) soit dans la colonne de distillation (23) pour enrichir le solvant (S), soit directement par la vanne (62) dans la chambre (1) de chauffage en arrosant de solvant (S) par la rampe (18) la matière (10) à traiter, ou par tout autre dispositif de répartition, tel que des buses ou des distributeurs statiques. Ainsi, on facilite et améliore l'épuisement de la matière (10) en soluté.

Selon une autre caractéristique de l'invention (voir figure 3), la partie basse (15) de la chambre de chauffage (1) où est disposé l'agitateur (16), est reliée par le fond à un circuit de soutirage-recyclage. Une vanne (101) permet de diriger à la demande le mélange solvant/soluté, soit vers une cuve de stockage (102) où ce mélange est soutiré, soit par une pompe (103) dans la tubulure (104) qui, par la vanne (105) et la tubulure (106), est reliée à la buse d'arrosage (17). La pompe centrifuge (103) permet ainsi de recycler en permanence des mélanges solvant/soluté. Une tuyauterie (110) branchée en dérivation, associée à une vanne (111), permet d'envoyer vers un sixième bac (112), les composés concentrés solubles (HC).

La référence (115) désigne un évent disposé sur le couvercle (3) de la chambre (1), et la référence (116) désigne un purgeur ou une pompe destiné à évacuer les condensats de vapeur de chauffe.

L'installation conforme à l'invention fonctionne de la manière suivante.

Dans les paniers perforés (11,12), on place un poivre baie rose (10), particulièrement recherché pour son fumet de fraicheur. On répartit au rateau cette matière (10) dans des paniers ou des grilles. On ferme le couvercle (3), puis on dégaze, soit par le vide (33), soit en ouvrant l'évent (115) de dégazage à pression atmosphérique.

On chauffe ensuite par de la vapeur injectée (8) pour amener la matière (10) à une température comprise entre 80 et 100°C. La durée de ce chauffage (de l'ordre de quelques minutes, voire de quelques secondes) dépend essentiellement de la nature et de la qualité de la matière (10) à traiter.

On ouvre ensuite brutalement la vanne (94), pour mettre l'enceinte (2) directement en relation avec le condenseur (26) préalablement mis sous vide poussé (de 0,01 à 0,05 bar absolu). La matière (10) s'autovaporise ainsi en quelques secondes. Il s'agit de l'effet éclair connu sous le nom de "flash". On récupère ainsi de cinq à dix pourcent de la matière dans le bac (41) des eaux riches en composés aromatiques légers (EA).

Une fois le "flash" terminé, on extrait les huiles essentielles décantables soit par traitement à la vapeur d'eau (8), soit à pression atmosphérique, soit par une source de vide (33) modérée (0,3 bar absolu), et on récupère l'huile essentielle décantable (HE) dans le premier bac (40) et les eaux aromatiques (EA) dans le deuxième bac (41). Grâce à l'agitation provoquée par ce "flash", on a également redistribué la matière (10) dans les paniers (11,12), ce qui va alors faciliter la diffusion ultérieure des solvants issus de la buse (17)

Les eaux aromatiques non valorisables sont éliminées en (42).

A ce moment, on a donc extrait de la matière (10) tous les composés volatils ou entraînables.

On introduit alors dans l'enceinte (2), grâce à la tubulure (77), plus précisément au fond de l'enceinte (6), un solvant (S), plus exactement un mélange hydroalcoolique frais, voire régénéré en (55). On envoie alors de la vapeur (8) dans la double enveloppe (7) pour amener le solvant S placé dans le fond (6) de l'enceinte (2), à une température comprise entre 50 et 60° C. Grâce à la pompe centrifuge (103), on diffuse ce solvant (S) sur la buse (17). Cette phase de diffusion dure généralement entre quinze et soixante minutes; elle peut être prolongée si celà est nécessaire.

On envoie ensuite le mélange solvant/soluté dans le circuit (92), pour récupérer le solvant dans le condenseur (26). On obtient ainsi un liquide L qui est recyclé par le reflux (61, 62) en (19) en tête de la chambre (1) riche en solvant/soluté. Périodiquement, ce mélange solvant/soluté, est soutiré en (102) pour être stocké. Ce mélange contient 20 à 80 % de solvant (S). Pour récupérer ce solvant (S), on déssolvante alors la matière (10) par injection de vapeur (8). On ouvre la vanne (94) pour amener la vapeur chargée en solvant au condenseur (26). Le liquide L, par le circuit de coulage (57), est amené au cinquième bac (60).

La matière (10) étant alors totalement épuisée, est retirée pour être mise aux déchets.

On peut répéter l'opération plusieurs fois en fonction d'une gestion pré-établie.

L'ouverture des différentes vannes peut être effectuée soit manuellement, soit en fonction d'une programmation.

Périodiquement, on effectue les différents classements.

Pour concentrer les eaux aromatiques (EA) contenues dans le deuxième bac (41), on ouvre la vanne (67) pour envoyer le liquide dans la chambre (1) de chauffage. On ouvre la vanne (22) pour mettre en service la colonne de distillation (23), puis on ouvre la vanne (25) pour mettre en service le condenseur (26). On récupère alors les concentrés aromatiques (CA) légers dans le troisième bac (54) et on reflue par (61) en tête de la colonne à distiller (23).

On obtient donc dans le bac (54), un composé riche en concentrés aromatiques (CA) commercialisable que l'on soutire en (85) ou que l'on travaille en l'envoyant dans le circuit (70) pour l'amener dans la chambre de chauffage (1).

On peut ainsi aisément redistiller en continu les eaux aromatiques (EA) contenues dans le bac (41) en les alimentant par le circuit (80) en milieu de la colonne de distillation (23). Lorsque l'on désire récupérer les solutés qui sont momentanément stockées en (102), on les réintroduit dans le fond (6) de l'enceinte (2). En chauffant la double enveloppe (7), on évapore le solvant (S) en prenant soin d'agiter fortement celle-ci de préférence sous vide. Le solvant remonte alors vers le condenseur (26) pour être stocké dans le cinquième bac (60). Une fois tous les solvants éliminés, on récupère les composés solubles dans ce bac (60).

Lorsque l'on désire régénérer le solvant (S), il suffit d'ouvrir la vanne (68) pour l'amener par la tuyauterie (70) dans le fond (6) de l'enceinte (2). On remet ensuite la colonne de distillation (23) en service et on récupère par le premier circuit de coulage (51) et la vanne (53) le solvant régénéré dans le quatrième bac (55). Le solvant ainsi régénéré (S) peut être par la vanne (66), à la demande, soit réintroduit dans la colonne de distillation (23), soit dans le circuit (70).

L'installation selon l'invention permet, grâce à un appareillage unique, d'extraire tous les composés valorisables d'une matière biologique et de concentrer tous ces composés. En outre, grâce à une source de vide, on prépare la matière à l' étape ultérieure de diffusion. Comme par ailleurs, on peut travailler sous un vide contrôlé, on améliore fortement la qualité des composés.

De la sorte, cette installation peut être utilisée avec succès pour le traitement de toutes les matières végétales ayant des composés extractibles par vapeur ou par solvant, tels que notamment les matières végétales : plantes, fruits, baies.. .

## Revendications

1. Installation pour extraire, concentrer et classer des composés bio-chimiques à partir de substances biologiques végétales ou animales, comprenant :
. une chambre de chauffage (1), destinée à recevoir les substances à traiter, reliée en partie basse à une arrivée de vapeur (8) et en partie haute à un circuit d'évaporation, et présentant en partie basse un agitateur (16),
. un circuit d'évaporation connecté à la partie haute de la chambre (1) de chauffage, puis par une vanne (22) au bas d'une colonne à distiller (23) reliée à son tour par le haut à une vanne (25), puis à un condenseur (26) relié à une source de vide (33),
. un circuit de coulage du liquide récupéré dans le condenseur (26), connecté à un bac de récupération, relié à son tour par une vanne soit au bas de la chambre de chauffage (1), soit à un orifice de soutirage (76),
. ledit liquide récupéré au condenseur étant formé soit d'un solvant, soit d'eaux aromatiques chargées en composés aromatiques légers entraînables, soit d'un mélange d'eau et d'huiles essentielles entraînables,
caractérisée en ce que le circuit de coulage comprend :
- un décanteur (35) relié par une vanne (36) au condenseur (26) puis à un premier bac (40) pour récupérer les huiles essentielles (HE), et à un second bac (41) pour récupérer les eaux aromatiques (EA), ledit décanteur (35) étant connecté à son tour par le haut à la source de vide (33) ;
- un circuit double de coulage relié :
. le premier (51) par un jeu de vannes (52,53) à un troisième bac (54) destiné à recevoir les composés aromatiques (CA) légers, et à un quatrième bac (55) destiné à recevoir le solvant régénéré (S),
. le second (56) par un jeu de vannes (58,59), soit au second bac (41) de récupération des eaux aromatiques (EA), soit à un cinquième bac (60) destiné à recevoir le solvant à régénérer (Sr), soit à un circuit de reflux (61) connecté par des vannes (62, 63), soit à la partie haute de la chambre de chauffage (1), soit à la partie haute de la colonne à distiller (23).

2. Installation selon la revendication 1, caractérisée en ce que le deuxième (41), le troisième (54), le quatrième (55) et le cinquième (60) bacs sont reliés à leur partie basse et par des vannes à un circuit (70) destiné à diriger le liquide, soit à la partie basse de la colonne à distiller (23), soit à la partie basse de la chambre de chauffage (1), soit à l'orifice de soutirage (76).

3. Installation selon l'une des revendications 1 et 2, caractérisée en ce que la chambre de chauffage (1) présente un circuit (90) relié directement au condenseur (26) formé de deux prises (20,91), associées à des vannes (93,94), disposées l'une (94) juste en dessus, l'autre (93) juste en dessous des substances (10) à traiter.

4. Installation selon l'une des revendications 1 à 3, caractérisée en ce que la partie basse (6) de la chambre de chauffage (1) où est disposé l'agitateur (16), est reliée à un circuit (100) de soutirage et de recyclage, destiné au moyen d'une vanne, à diriger le mélange solvant-soluté, soit vers une cuve (102) de stockage (soutirage), soit vers une pompe de recyclage (103) de ce liquide en partie haute de la chambre de chauffage (1).

5. Installation selon l'une des revendications 1 à 4, caractérisée en ce que le circuit de recyclage comporte une vanne (111) pour diriger le liquide à un sixième bac (112) destiné à récupérer les fractions concentrées (HC) solubles du solvant.

6. Installation selon l'une des revendications 1 à 5, caractérisée en ce que la chambre de chauffage (1) présente en partie haute, un orifice d'amenée relié au circuit de recyclage du solvant qui débouche sur un moyen (18) pour arroser les substances de solvant, telles que par exemple des buses, des rampes ou un distributeur statique.

## Claims

1. Installation for extracting, concentrating and separating biochemical compounds from plant or animal biological substances, comprising :
. a heating vessel (1), designed to receive the substances to be treated, connected at the lower part to a steam supply (8) and at the upper part to an evaporation circuit, and having, at the lower part, a stirrer (16),
. an evaporation circuit connected to the upper part of the heating vessel (1), then by a valve (22) to the bottom of a distillation column (23), which is in turn connected at the top to a valve (25), then to a condenser (26) which is connected to a vaccum source (33),
. a circuit for discharging the liquid recovered in the condenser (26), connected to a recovery tank, which is in turn connected by a valve either to the heating vessel (1) or to a draw-off orifice (76),
. the said liquid, recovered in the condenser, consisting either of the solvent, or of aromatic waters charged with distillable light aromatic compounds, or of a mixture of water and distillable essential oils,
**characterized** in that the discharging circuit comprises :
- a decanter (35) connected by a valve (36) to the condenser (26), then to a first tank (40) for recovering the essential oils (HE), and to a second tank (41) for recovering the aromatic waters (EA), the said decanter (35) being in turn connected at the top to the vacuum source (33) ;
- a dual discharging circuit connected :
. the first (51), by a set of valves (52,53) to a third tank (54) designed to receive the light aromatic compounds (CA), and to a fourth tank (55) designed to receive the regenerated solvent (5),
. the second (56), by a set of valves (58,59), either to the second tank (41) for recovering the aromatic waters (EA), or to a fifth tank (60) designed to receive the solvent to be regenerated (Sr), or to a reflux circuit (61) connected by valves (62,63), either to the upper part of the heating vessel (1) or to the upper part of the distillation column (23).

2. Installation according to Claim 1, characterized in that the second (41), third (54), fourth (55) and fifth (60) tanks are connected, at their lower part and by valves, to a circuit (70) designed to direct the liquid either to the lower part of the distillation column (23), or to the lower part of the heating vessel (1), or to the draw-off orifice (76).

3. Installation according to one of Claims 1 and 2, characterized in that the heating vessel (1) incorporates a circuit (90) connected directly to the condenser (26), and consisting of two outlets (20, 91), connected to valves (93, 94), arranged one (94) just above, the other (93) just below the substances (10) to be treated.

4. Installation according to one of Claims 1 to 3, characterized in that the lower part (6) of the heating vessel (1) where the stirrer (16) is placed, is connected to a draw-off and recycling circuit (100) designed, by means of a valve, to direct the solvent-solute mixture either to a storage tank (102) (drawing off), or to a pump (103) for recycling this liquid to the upper part of the heating vessel (1).

5. Installation according to one of Claims 1 to 4, characterized in that the recycling circuit incorporates a valve (111) for directing the liquid to a sixth tank (112) designed to recover the soluble concentrated fractions (HC) of the solvent.

6. Installation according to one of Claims 1 to 5, characterized in that the heating vessel (1) has, at the upper part, a supply orifice connected to the circuit for recycling the solvent, which opens out into a means (18) for spraying the substances with solvent, such as for example nozzles, racks or a static distributor.

## Patentansprüche

1. Einrichtung zum Extrahieren, Konzentrieren und Abtrennen biochemischer Verbindungen aus pflanzlichen oder tierischen biologischen Stoffen, umfassend:
. eine zu Aufnahme der zu behandelnden Stoffe bestimmte Heizkammer (1), die im unteren Teil mit einem Dampfzugang (8) und im oberen Teil mit einem Verdampfungskreis verbunden ist sowie im unteren Teil einen Rührer (16) aufweist,
. einen Verdampfungskreis, der an den oberen Teil der Heizkammer (1) sowie über ein Ventil (22) an den Fuß einer Destillationskolonne (23) angeschlossen ist, die ihrerseits am Kopf mit einem Ventil (25) sowie einem Kondensator (26) verbunden ist, der mit einer Vakuumquelle (33) verbunden ist, und
. einen Strömungskreis für die im Kondensator (26) zurückgewonnene Flüssigkeit, der mit einem Rückgewinnungsbehälter verbunden ist, der seinerseits über ein Ventil entweder mit dem Fuß der Heizkammer (1) oder mit einer Abzugsöffnung (76) verbunden ist,
. wobei besagte, im Kondensator zurückgewonnene Flüssigkeit entweder aus einem Lösungsmittel oder aus mit leichtflüchtigen Aromaverbindungen beladenen aromatischen Wässern oder einem Gemisch aus Wasser und flüchtigen ätherischen Ölen gebildet ist,
dadurch gekennzeichnet, daß der Strömungskreis folgendes umfaßt:
- einen Abscheider (35), der über ein Ventil (36) mit dem Kondensator (26) sowie mit einem ersten Behälter (40) zur Aufnahme der ätherischen Öle (HE) und mit einem zweiten Behälter (41) zur Aufnahme der aromatischen Wässer (EA) verbunden ist, wobei dieser Abscheider (35) seinerseits oben an die Vakuumquelle (33) angeschlossen ist, und
- einen doppelten Strömungskreis,
. wobei der erste (51) über eine Reihe von Ventilen (52, 53) mit einem dritten Behälter (54) zur Aufnahme der leichten Aromaverbindungen (CA) und mit einem vierten Behälter (55) zur Aufnahme des regenerierten Lösungsmittels (S) verbunden ist und
. der zweite (56) über einer Reihe von Ventilen (58, 59) entweder mit dem zweiten Behälter (41) zur Aufnahme der aromatischen Wässer (EA) oder mit einem fünften Behälter (60) zur Aufnahme des zu regenerierenden Lösungsmittels (Sr) oder mit einem Rücklaufkreis (61) verbunden ist, der über Ventile (62, 63) entweder an den oberen Teil der Heizkammer (1) oder an den Kopfteil der Destillationskolonne (23) angeschlossen ist.

2. Einrichtung nach Anspruch 1, dadurch gekennzeichnet, daß der zweite (41), der dritte (54), der vierte (55) und der fünfte (60) Behälter in ihrem unteren Teil über Ventile mit einem Kreis (70) verbunden sind, der dazu dient, die Flüssigkeit entweder in den Fußteil der Destillationskolonne (23) oder in den unteren Teil der Heizkammer (1) oder zu der Abzugsöffnung (76) zu lenken.

3. Einrichtung nach einem der Ansprüche 1 und 2, dadurch gekennzeichnet, daß die Heizkammer (1) einen Kreis (90) aufweist, der direkt mit dem Kondensator (26) verbunden ist und durch zwei Abzüge (20, 91) gebildet wird, denen Ventile (93, 94) zugeordnet sind, von denen das eine (94) gerade über und das andere (93) gerade unter den zu behandelnden Stoffen (10) angeordnet ist.

4. Einrichtung nach einem der Ansprüche 1 bis 3, dadurch gekennzeichnet, daß der untere Teil (6) der Heizkammer (1), wo sich der Rührer (16) befindet, mit einem Abzugs- und Rückführungskreis (100) verbunden ist, der dazu dient, mittels eines Ventils das Gemisch aus Lösungsmittel und Gelöstem entweder zu einem Lager- bzw. Abzugstank (102) oder zu einer Rückführungspumpe (103) für diese Flüssigkeit in den oberen Teil der Heizkammer (1) zu lenken.

5. Einrichtung nach einem der Ansprüche 1 bis 4, dadurch gekennzeichnet, daß der Rückführungskreis ein Ventil (111) zur Lenkung der Flüssigkeit zu einem sechsten Behälter (112) enthält, der dazu dient, die löslichen konzentrierten Fraktionen (HC) des Lösungsmittels zurückzugewinnen.

6. Einrichtung nach einem der Ansprüche 1 bis 5, dadurch gekennzeichnet, daß die Heizkammer (1) im oberen Teil eine Zufuhröffnung aufweist, die mit dem Lösungsmittelrückführungskreis, der zu einer Vorrichtung (18) zum Besprühen der Stoffe mit Lösungsmittel, wie beispielsweise Düsen, Rampen oder einem statischen Verteiler, führt, verbunden ist.
